# EUROPÄISCHE PATENTANMELDUNG

(11) **EP 4 800 823 A1**
(43) Veröffentlichungstag der Anmeldung: **02.09.2026**
(21) Anmeldenummer: 25160775.0
(22) Anmeldetag: 28.02.2025
(51) Int. Cl.: H01M 50/213, H01M 50/503

(54) **ZELLVERBINDUNGSVORRICHTUNG MIT AUSSPARUNGEN**

(71) Anmelder: Hilti Aktiengesellschaft, 9494 Schaan (LI)
(72) Erfinder: Möhlmann, Alwin, 86399 Bobingen (DE); Ziegler, Bernd, 86830 Schabmünchen (DE)
(74) Vertreter: Hilti Aktiengesellschaft Corporate Intellectual Property

(57) **Zusammenfassung**

Akkumulator, insbesondere als Energiespeichereinheit für eine Werkzeugmaschine, enthaltend wenigstens eine Energiespeicherzelle mit einem ersten und zweiten Polkontakt und eine Zellverbindungsvorrichtung mit einem Trägerelement zum Leiten elektrischer Energie und wenigstens einer Kontakteinheit zum Verbinden eines Polkontakt mit der Zellverbindungsvorrichtung.

Die wenigstens eine Kontakteinheit enthält im Wesentlichen einen ersten, zweiten und dritten Bereich, wobei der erste Bereich im Wesentlichen in einer ersten Ebene und der zweite Bereich im Wesentlichen in einer zweiten Ebene liegt, und wobei der dritte Bereich verbindend zwischen dem ersten und zweiten Bereich positioniert ist, und wobei wenigstens eine erste Aussparung () enthalten ist, die wenigstens teilweise im dritten Bereich positioniert ist.

## Beschreibung

Die vorliegende Erfindung betrifft einen Akkumulator, insbesondere als Energiespeichereinheit für eine Werkzeugmaschine, enthaltend wenigstens eine Energiespeicherzelle mit einem ersten und zweiten Polkontakt und eine Zellverbindungsvorrichtung zum Leiten elektrischer Energie mit einem Trägerelement und wenigstens einer Kontakteinheit zum Verbinden eines Polkontakt mit der Zellverbindungsvorrichtung.

Des Weiteren betrifft die vorliegende Erfindung einen Zellverbindungsvorrichtung für einen Akkumulator.

Akkumulatoren mit einzelnen Akku-Zellen, die mit Hilfe eines sogenannten Zellträgers sicher innerhalb eines Akku-Gehäuses gehalten werden, sind gemäß dem Stand der Technik als wiederlösbare Energieversorgung für eine elektrische Werkzeugmaschine weitestgehend gekannt. Die Akku-Zellen dienen zum Aufnehmen, Speichern und Abgeben elektrischer Energie. Zum Entladen des Akkumulators wird die in den Akku-Zellen gespeicherte elektrische Energie mit Hilfe eines sogenannten Zellverbinders von den Akku-Zellen an eine Akku-Schnittstelle geleitete. Zum Laden des Akkumulators wird wiederum elektrische Energie von einer Ladevorrichtung über die Akku-Schnittstelle und den Zellverbinder zu den Akku-Zellen geleitet. Für ein möglichst schnelles sowie effizientes Laden und Entladen der Akku-Zellen muss der Zellverbinder besondere Funktionen bzw. Eigenschaften erfüllen. Zum einen sollte der Zellverbinder möglichst massiv gestalten sein, um ausreichend gut die elektrische Energie leiten zu können. Darüber hinaus sollte der Zellverbinder eine möglichst dichte Verbindung mit den Polen einer Akku-Zelle aufweisen, damit bei einem Übergang der elektrischen Energie von der Akku-Zelle auf den Zellverbinder keine Verluste oder Lichtbögen entstehen. Zum anderen sollte der Zellverbinder nicht zu groß oder schwer gestaltet sein.

Bei den bereits bekannten Zellverbindern sind jedoch oftmals nicht alle Funktionen bzw. Eigenschaften in ausreichendem Masse erfüllt und ein Kompromisse mussten bei der Entwicklung dieser Zellverbinder eingegangen werden. Zellverbinder gemäß dem Stand der Technik sind daher oftmals entweder zu groß und schwer oder bieten eine nicht optimale Leitfähigkeit für elektrische Energie.

Es ist damit Aufgabe der vorliegenden Erfindung das vorstehend beschriebene Problem zu lösen.

Die Aufgabe wird gelöst durch den Gegenstand des unabhängigen Patentanspruchs 1 und 8.

Weitere vorteilhafte Ausführungsformen des erfindungsgemäßen Gegenstands sind in den entsprechenden abhängigen Patentansprüchen enthalten.

Die Aufgabe wird dabei insbesondere gelöst durch einen Akkumulator, insbesondere als Energiespeichereinheit für eine Werkzeugmaschine, enthaltend wenigstens eine Energiespeicherzelle mit einem ersten und zweiten Polkontakt und eine Zellverbindungsvorrichtung zum Leiten elektrischer Energie mit einem Trägerelement und wenigstens einer Kontakteinheit zum Verbinden eines Polkontakt mit der Zellverbindungsvorrichtung.

Erfindungsgemäß ist vorgesehen, dass die wenigstens eine Kontakteinheit im Wesentlichen einen ersten, zweiten und dritten Bereich enthält, wobei der erste Bereich im Wesentlichen in einer ersten Ebene und der zweite Bereich im Wesentlichen in einer zweiten Ebene liegt, und wobei der dritte Bereich verbindend zwischen dem ersten und zweiten Bereich positioniert ist, und wobei wenigstens eine erste Aussparung enthalten ist, die wenigstens teilweise im dritten Bereich positioniert ist.

Mit Hilfe der Aussparung kann Material an dem Trägerelement eingespart werden, wodurch das Gewicht der Zellverbindungsvorrichtung verringert werden kann. Die Anbindungsfläche zwischen Trägerelement und Energiespeicherzelle ist hiervon jedoch nicht betroffen, sodass eine nahezu optimale Leitfähigkeit für die elektrische Energie erreicht werden kann.

Des Weiteren kann durch die Aussparung ein Gas, welches aus einer Energiespeicherzelle ausströmen kann, von der Zellverbindungsvorrichtung entweichen.

Entsprechend einer alternativen und vorteilhaften Ausführungsform kann es möglich sein, dass eine erste Oberfläche des zweiten Bereichs der Kontakteinheit an einem Polkontakt anliegt. Hierdurch kann eine relativ große Anliegefläche für einen möglichst optimalen Transfer elektrischer Energie geschaffen werden. Hierdurch kann eine möglichst hohe Leitfähigkeit für die elektrische Energie erreicht werden.

Gemäß einer weiteren vorteilhaften Ausführungsform kann es möglich sein, dass eine zweite Aussparung im Wesentlichen in einem Mittelpunkt des zweiten Bereichs enthalten ist. Hierdurch kann die Kontakteinheit bündig an einer Stirnseite einer Energiespeicherzelle anlegt werden.

Entsprechend einer weiteren vorteilhaften Ausführungsform kann es möglich sein, dass die Gesamtfläche der wenigstens ersten Aussparung wenigstens 15% der Oberfläche des zweiten und dritten Bereichs entspricht. Hierdurch wird ein nahezu optimales Verhältnis zwischen Gewichtseinsparung und elektrischer Leitfähigkeit erreicht.

Gemäß einer weiteren vorteilhaften Ausführungsform kann es möglich sein, dass die Gesamtfläche der wenigstens ersten Aussparung weniger als 25% der Oberfläche des zweiten und dritten Bereichs entspricht. Hierdurch wird ebenfalls ein Beitrag für ein nahezu optimales Verhältnis zwischen Gewichtseinsparung und elektrischer Leitfähigkeit erreicht.

Entsprechend einer weiteren vorteilhaften Ausführungsform kann es möglich sein, dass die zweite Aussparung im Wesentlichen kreisrund ausgestaltet ist und der Durchmesser der zweiten Aussparung zwischen 35% und 40%, insbesondere 38%, des Durchmessers einer zylindrisch ausgestalteten Energiespeicherzelle entspricht. Hierdurch wird abermals ein Beitrag für ein nahezu optimales Verhältnis zwischen Gewichtseinsparung und elektrischer Leitfähigkeit erreicht.

Gemäß einer weiteren vorteilhaften Ausführungsform kann es möglich sein, dass wenigstens ein Verbindungsbereich zum stoffschlüssigen Verbinden einer Kontakteinheit mit einer Energiespeicherzelle in dem zweiten Bereich vorgesehen ist, wobei weder die wenigstens erste Aussparung noch die zweite Aussparung in dem wenigstens einen Verbindungsbereich positioniert ist.

Bei dem stoffschlüssigen Verbinden kann es sich um einen Schweißvorgang und insbesondere um einen Laserschweißvorgang handeln. Alternativ kann es sich bei dem stoffschlüssigen Verbinden um einen Klebevorgang oder Lötvorgang handeln.

Des Weiteren wird die Aufgabe gelöst durch einen Zellverbindungsvorrichtung für einen Akkumulator gemäß wenigstens einer vorstehend beschriebenen Ausführungsform.

Weitere Vorteile ergeben sich aus der folgenden Figurenbeschreibung. In den Figuren sind verschiedene Ausführungsbeispiele der vorliegenden Erfindung dargestellt.

Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: eine Seitenansicht auf einen erfindungsgemäßen Akkumulator mit einem AkkuGehäuse, einer Anzahl an Energiespeicherzellen und Zellverbindungsvorrichtungen gemäß einer beispielhaften Ausführungsform;
- Figur 2: eine Topansicht auf eine Zellverbindungsvorrichtung mit vier Kontakteinheiten;
- Figur 3: eine perspektivische Ansicht auf eine Energiespeicherzelle verbunden an einer Zellverbindungsvorrichtung mit einer Kontakteinheit;
- Figur 4: eine Schnittansicht entlang der Schnittlinie A-A in Fig. 3 durch an einen oberen Anteil einer Energiespeicherzelle und einer Kontakteinheit;
- Figur 5a: eine Ansicht auf eine Oberseite einer Kontakteinheit gemäß einer beispielhaften Ausführungsform; und
- Figur 5b: eine Ansicht auf eine Unterseite einer Kontakteinheit gemäß einer beispielhaften Ausführungsform.

### Ausführungsbeispiele:

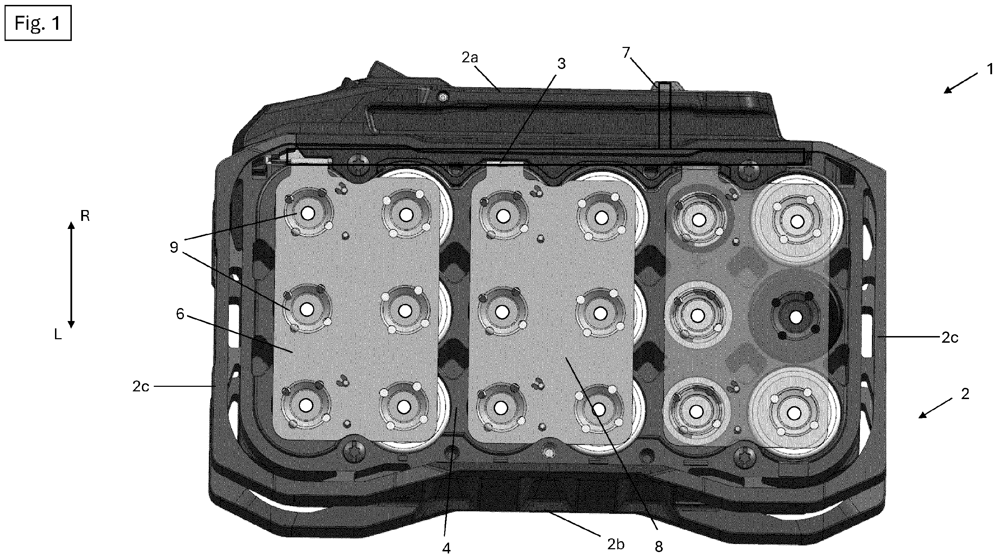

Figur 1 zeigt eine Schnittansicht durch einen erfindungsgemäßen Akkumulator 1 gemäß einer ersten beispielhaften Ausführungsform.

Der Akkumulator 1 kann als Energiequelle wiederlösbar mit einer elektrischen Werkzeugmaschine verwendet werden. Bei der Werkzeugmaschine kann es sich um einen Bohrhammer, Akku-Schrauber, eine Säge, ein Schleifgerät oder dergleichen handeln. Die Werkzeugmaschine ist in den Figuren nicht dargestellt.

Der Akkumulator 1 enthält im Wesentlichen ein Akkugehäuse 2, eine Steuerungseinrichtung 3, eine Zellhalteeinrichtung 4, eine Anzahl an Energiespeicherzellen 5 und Zellverbindungsvorrichtungen 6.

Das Akkugehäuse 2 weist eine Oberseite 2a, eine Unterseite 2b sowie vier Seitenwände 2c auf. An der Oberseite 2a des Akkugehäuses 2 ist eine Akkuschnittstelle 7 positioniert.

Mit Hilfe der Akkuschnittstelle 7 kann der Akkumulator wiederlösbar mit einer Werkzeugmaschine verbunden werden. Die Werkzeugmaschine ist in den Figuren nicht gezeigt. Des Weiteren kann mit Hilfe der Akkuschnittstelle 7 der Akkumulator 1 wiederlösbar mit einer Ladeeinrichtung verbunden werden. Die Ladeeinrichtung ist in den Figuren nicht dargestellt.

Die Steuerungseinrichtung 3 dient zum Steuern und Regeln der unterschiedlichen Funktionen des Akkumulators 1. Die Steuerungseinrichtung 3 ist in einem oberen Anteil des Akkugehäuses 2 in Pfeilrichtung N angeordnet. Des Weiteren ist die Steuerungseinrichtung 3 mit der Akkuschnittstelle 7 so verbunden, dass elektrische Energie von der Steuerungseinrichtung 3 zu der Akkuschnittstelle 7 oder von der Akkuschnittstelle 7 zu der Steuerungseinrichtung 3 geleitet werden kann.

Die Energiespeicherzellen 5 können auch als Akku-Zellen oder Energiezellen bezeichnet werden und sind im Inneren des Akkugehäuses 2 angeordnet.

Die Energiespeicherzellen 5 dienen zum Aufnehmen, Speichern und erneuten Abgeben elektrischer Energie. Die Energiespeicherzellen 5 sind in zylindrischer Form sowie auf Basis einer Lithium-Ionen-Technologie ausgestaltet. Jede Energiespeicherzelle 5 enthält an einem ersten Ende einen ersten Polkontakt 5a und an einem zweiten Ende einen zweiten Polkontakt 5b. Der erste Polkontakt 5a kann als Pluspol und der zweite Polkontakt 5b kann als Minuspol bezeichnet werden Die Polkontakte 5a, 5b dienen zum Schließen eines Stromkreises und zur Übertragung elektrischer Energie von der Energiespeicherzelle 5.

Alternativ können die Energiespeicherzellen auch auf einer anderen geeigneten Technologie als Lithium-Ionen basieren.

Die Zellhalteeinrichtung 4 dient zum Aufnehmen und Halten der Energiespeicherzellen 5. Die Zellhalteeinrichtung 4 ist dazu im Wesentlichen als Block (bzw. Quader) ausgestaltet. Der Block weist eine Anzahl an Aussparungen in Form von Durchbohrungen auf, wobei in eine Aussparung jeweils eine Energiespeicherzelle 5 positioniert ist. Die Energiespeicherzellen 5 sind so in den Aussparungen positioniert, dass der jeweilige erste Polkontakt (= Pluspol) an einem Ende der Zellhalteeinrichtung 4 und der jeweilige zweite Polkontakt (= Minuspol) an einem gegenüberliegenden Ende der Zellhalteeinrichtung 4 hinausragt.

Eine Zellverbindungsvorrichtung 6 dient zum Kontaktieren der jeweiligen Polkontakte 5a, 5b der Energiespeicherzellen 5 und zum Leiten elektrischer Energie.

Die Zellverbindungsvorrichtung 6 enthält dazu im Wesentlichen ein Trägerelement 8 und eine Anzahl an Kontakteinheiten 9.

Das Trägerelement 8 ist gemäß einer beispielhaften Ausführungsform als rechteckige Platte aus einem leitfähigen Material ausgestaltet. An einem Ende des Trägerelements 8 ist eine Anschlusseinheit 10 vorgesehen. Durch die Anschlusseinheit 10 ist das Trägerelement 8 mit der Steuerungseinrichtung 3 verbunden, sodass elektrische Energie von dem Trägerelement 8 an die Steuerungseinrichtung 3 übertragen werden kann.

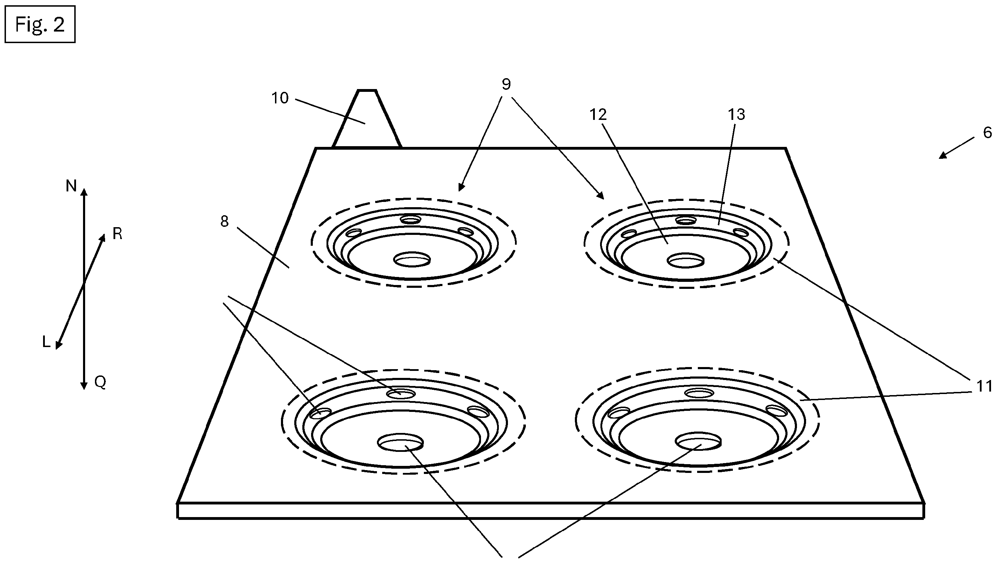

Wie insbesondere in Figur 2, 3, 5a und 5b angedeutet, ist eine Kontakteinheit 9 im Wesentlichen als napfförmige oder topfförmige Vertiefung in Pfeilrichtung Q ausgestaltet.

Eine Kontakteinheit 9 enthält gemäß dem beispielhaften Ausführungsbeispiel einen ersten Bereich 11, zweiten Bereich 12 und dritten Bereich 13.

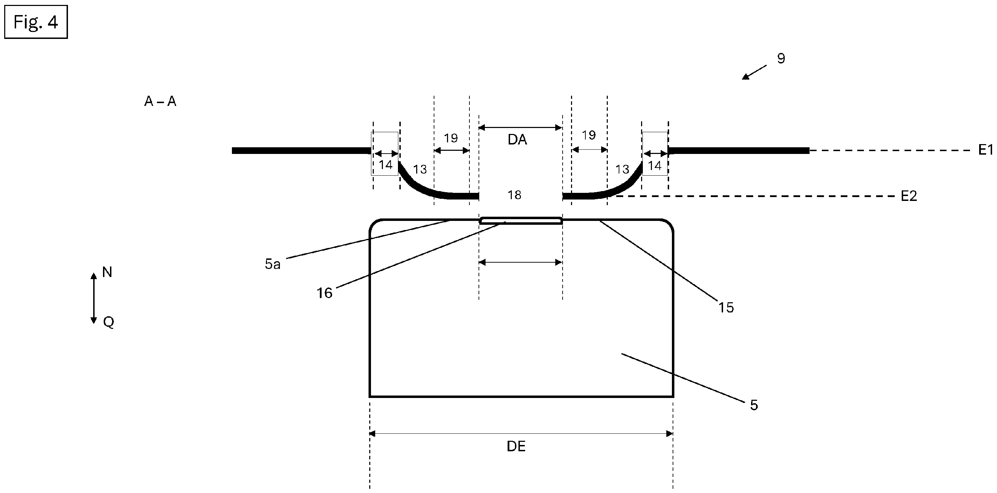

Wie insbesondere in Figur 4 gezeigt, ist der erste Bereich 11 in einer ersten Ebene E1 positioniert. Der zweite Bereich 12 ist hingegen in einer zweiten Ebene E2 positioniert. Die erste Ebene E1 ist in Pfeilrichtung N über der zweiten Ebene E2 angeordnet. Das Trägerelement 8 liegt dabei im Wesentlichen in der ersten Ebene E1.

Wie in den Figuren angedeutet, ist der erste Bereich 11 ein Teil des Trägerelements 8 bzw. liegt der erste Bereich 11 im Trägerelement 8.

Der dritte Bereich 13 ist zwischen dem ersten und zweiten Bereich 11, 12 angeordnet und verbindet damit den ersten und zweiten Bereich 11, 12.

Sowohl der erste Bereich 11 als auch der zweite Bereich 12 ist im Wesentlichen kreisrund ausgestaltet.

Der dritte Bereich 13 ist ringförmig ausgestaltet.

Entsprechend dem gezeigten Ausführungsbeispiel weist der dritte ringförmige Bereich 13 eine gebogene bzw. gewölbte Fläche auf.

Gemäß einer alternativen Ausführungsform kann der dritte ringförmige Bereich 13 auch eine gerade bzw. flache Fläche aufweisen.

Die Kontakteinheit 9 ist dadurch topf- bzw. napfförmig ausgestaltet mit einem konkaven Anteil und einem konvexen Anteil.

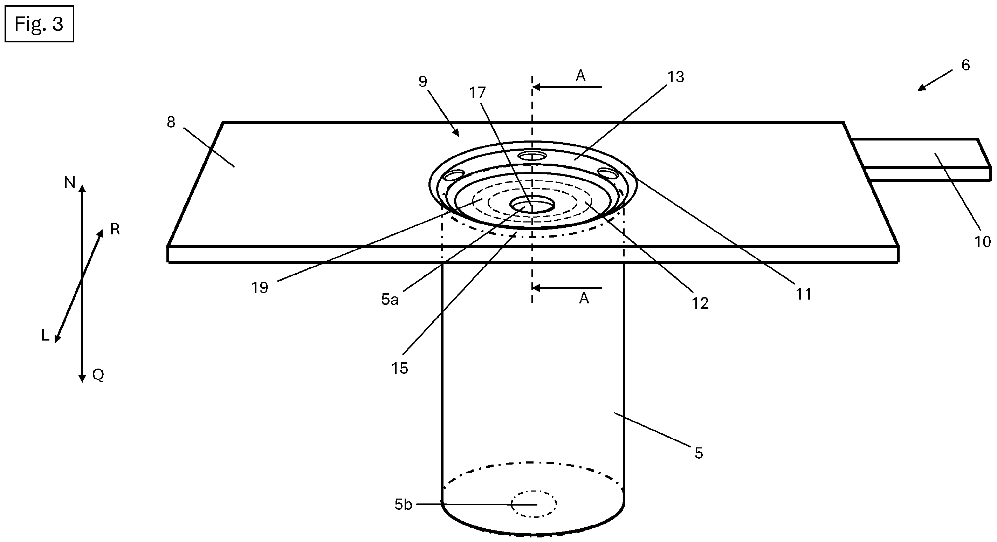

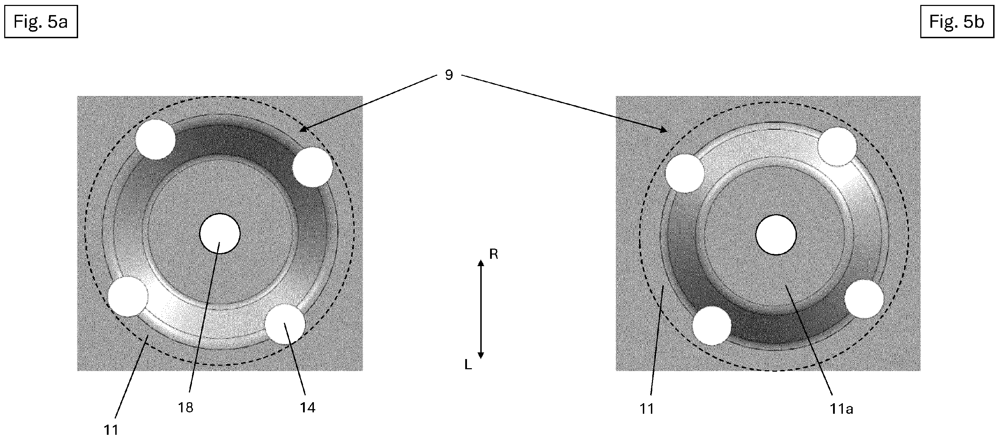

Wie in den Figuren 2 bis 5 gezeigt, sind vier Aussparungen 14 in dem dritten Bereich 13 der Kontakteinheit 9 angeordnet. In Figur 2 und 3 sind lediglich drei Aussparungen 14 in dem dritten Bereich 13 gezeigt. In Figur 5 sind alle vier Aussparungen 14 zeigt.

Eine Aussparung der vier Aussparungen 14 in dem dritten Bereich 13 der Kontakteinheit 9 kann dabei als erste Aussparung bezeichnet werden.

Alternativ können mehr oder weniger als vier Aussparungen 14 an einem dritten Bereich 13 der Kontakteinheit 9 vorhanden sein.

Die Aussparungen 14 im dritten Bereich 13 der Kontakteinheit 9 können dazu dienen, dass ein aus der Energiespeicherzelle 5 ausströmendes Gas durch die Zellverbindungsvorrichtung 6 strömen kann.

Die Aussparungen 14 für das ausströmende Gas der Energiespeicherzelle 5 müssen nicht vollständig und nur in dem dritten Bereich der Kontakteinheit 9 liegen. Es ist auch möglich, dass die Aussparungen 14 für das ausströmende Gas der Energiespeicherzelle 5 anteilig in dem ersten und/oder zweiten Bereich 11, 12 der Kontakteinheit 9 liegen. Die Aussparungen 14 müssen dabei nicht kreisrund sein, sondern können auch nahezu jede andere Form aufweisen. Die Aussparungen 14 für das ausströmende Gas der Energiespeicherzelle 5 müssen auch nicht einheitlich gestaltet sein.

In den Figuren 5a und 5b sind vier Aussparungen 14 für das ausströmende Gas der Energiespeicherzelle 5 ungefähr zu Hälfte in dem ersten und dritten Bereich 11, 13 der Kontakteinheit 9 positioniert.

In Figur 4 ist ein oberer Anteil einer zylindrischen Energiespeicherzelle 5 gezeigt. Eine zylindrische Energiespeicherzelle 5 weist dabei jedoch eine nicht absolut flache bzw. ebene Stirnseite 15 auf. Wie in Figur 4 angedeutet, weist die Energiespeicherzelle 5 eine gewisse Erhöhung 16 in Pfeilrichtung N auf. Die relativ unebene bzw. nicht absolut flache Oberfläche an der Stirnseite 15 der Energiespeicherzelle 5 ist häufig bedingt durch Ungenauigkeiten in dem Herstellungsprozess der Energiespeicherzelle 5.

Im Mittelpunkt bzw. Zentrum 17 des zweiten Bereich 12 der Kontakteinheit 9 ist eine kreisförmige bzw. kreisrunde Aussparung 18 vorgesehen. Diese Aussparung 18 dient dazu, dass eine erste Oberfläche 11a des zweiten Bereichs 11 möglichst bündig auf der Stirnseite 15 der Energiespeicherzelle 5 anliegen kann. Eine Unebenheit im Zentrum 17 der Stirnseite 15 der Energiespeicherzelle 5 liegt in der Aussparung 18 des dritten Bereichs 13 der Kontakteinheit 9.

Gemäß einer weiteren alternativen Ausführungsform ist ein ringförmiger Verbindungsbereich 19 in dem zweiten Bereich 12 einer Kontakteinheit 9 vorgesehen, vgl. Figur 4. Der Verbindungsbereich 19 dient zum stoffschlüssigen Verbinden einer Kontakteinheit 9 mit einer Energiespeicherzelle 5. Das stoffschlüssige Verbinden ist in dem vorliegenden Ausführungsbeispiel durch Laserschweißen verwirklicht. Der zweite Bereich 12 der Kontakteinheit 9 muss daher ausreichend breit (d.h. ausreichend breiter Radius des zweiten Bereichs 12) gestaltet sein, dass ein oder mehrere Schweißnähte in dem zweiten Bereich 12 angeordnet werden können.

### Bezugszeichen

- 1: Akkumulator
- 2: Akkugehäuse
- 2a: Oberseite des Akkugehäuses
- 2b: Unterseite des Akkugehäuse
- 2c: Seitenwand des Akkugehäuse
- 3: Steuerungseinrichtung
- 4: Zellhalteeinrichtung
- 5: Energiespeicherzelle
- 5a: erster Polkontakt der Energiespeicherzelle
- 5b: zweiter Polkontakte der Energiespeicherzelle
- 6: Zellverbindungsvorrichtung
- 7: Akkuschnittstelle
- 8: Trägerelement
- 9: Kontakteinheit
- 10: Anschlusseinheit
- 11: erster Bereich der Kontakteinheit
- 11a: erste Oberfläche des zweiten Bereichs der der Kontakteinheit
- 12: zweite Bereich der Kontakteinheit
- 13: dritte Bereich der Kontakteinheit
- 14: Aussparungen in dem dritten Bereich der Kontakteinheit
- 15: Stirnseite der Energiespeicherzelle
- 16: Erhöhung an Stirnseite der Energiespeicherzelle
- 17: Mittelpunkt bzw. Zentrum des zweiten Bereich der Kontakteinheit
- 18: Aussparung des dritten Bereichs der Kontakteinheit
- 19: ringförmige Verbindungsbereich in dem zweiten Bereich einer Kontakteinheit
- E1: erste Ebene
- E2: zweite Ebene
- DE: Durchmesser der Energiespeicherzelle
- DA: Durchmesser der zweiten Aussparung

## Patentansprüche

1. Akkumulator (1), insbesondere als Energiespeichereinheit für eine Werkzeugmaschine (1), enthaltend wenigstens eine Energiespeicherzelle (5) mit einem ersten und zweiten Polkontakt (5a, 5b) und eine Zellverbindungsvorrichtung (6) zum Leiten elektrischer Energie mit einem Trägerelement (8) und wenigstens einer Kontakteinheit (9) zum Verbinden eines Polkontakt (5a, 5b) mit der Zellverbindungsvorrichtung (6),
**dadurch gekennzeichnet, dass** die wenigstens eine Kontakteinheit (9) im Wesentlichen einen ersten, zweiten und dritten Bereich (11, 12, 13) enthält, wobei der erste Bereich (11) im Wesentlichen in einer ersten Ebene (E1) und der zweite Bereich (12) im Wesentlichen in einer zweiten Ebene (E2) liegt, und wobei der dritte Bereich (13) verbindend zwischen dem ersten und zweiten Bereich (11, 12) positioniert ist, und wobei wenigstens eine erste Aussparung (10) enthalten ist, die wenigstens teilweise im dritten Bereich (13) positioniert ist.

2. Akkumulator (1) nach Anspruch 1,
**dadurch gekennzeichnet, dass** eine erste Oberfläche (11a) des zweiten Bereichs (12) der Kontakteinheit (9) an einem Polkontakt (5a, 5b) anliegt.

3. Akkumulator (1) nach Anspruch 1 oder 2,
**dadurch gekennzeichnet, dass** eine zweite Aussparung (18) im Wesentlichen in einem Mittelpunkt (17) des zweiten Bereichs (12) enthalten ist.

4. Akkumulator (1) nach wenigstens einem der Ansprüche 1 bis 3,
**dadurch gekennzeichnet, dass** die Gesamtfläche der wenigstens ersten Aussparung (10) wenigstens 15% der Oberfläche des zweiten und dritten Bereichs (12, 13) entspricht.

5. Akkumulator (1) nach wenigstens einem der Ansprüche 1 bis 4,
**dadurch gekennzeichnet, dass** die Gesamtfläche der wenigstens ersten Aussparung (10) weniger als 25% der Oberfläche des zweiten und dritten Bereichs (12, 13) entspricht.

6. Akkumulator (1) nach wenigstens einem der Ansprüche 3 bis 4,
**dadurch gekennzeichnet, dass** die zweite Aussparung (18) im Wesentlichen kreisrund ausgestaltet ist und der Durchmesser (DA) der zweiten Aussparung zwischen 35% und 40%, insbesondere 38%, des Durchmessers (DE) einer zylindrisch ausgestalteten Energiespeicherzelle (5) entspricht.

7. Akkumulator (1) nach wenigstens einem der Ansprüche 1 bis 4,
**dadurch gekennzeichnet, dass** wenigstens ein Verbindungsbereich (19) zum stoffschlüssigen Verbinden einer Kontakteinheit (9) mit einer Energiespeicherzelle (5) in dem zweiten Bereich (12) vorgesehen ist, wobei weder die wenigstens erste Aussparung (10) noch die zweite Aussparung (18) in dem wenigstens einen Verbindungsbereich (19) positioniert ist.

8. Zellverbindungsvorrichtung (6) für einen Akkumulator (1) nach wenigstens einem der Ansprüche 1 bis 7.
